# EUROPÄISCHE PATENTSCHRIFT

(11) **EP 2 686 501 B1**
(45) Veröffentlichungstag und Bekanntmachung des Hinweises auf die Patenterteilung: **30.07.2014**
(21) Anmeldenummer: 12710870.2
(22) Anmeldetag: 14.03.2012
(51) Int. Cl.: E04B 9/16, E04B 9/18, E04B 9/20

(54) **ZUSAMMENBAUTEIL SOWIE ABHÄNGEVORRICHTUNG FÜR TRAGSCHIENEN UND VERFAHREN ZU DEREN HERSTELLUNG**
COMPONENT ASSEMBLY AND SUSPENSION DEVICE FOR SUPPORTING RAILS AND METHOD FOR PRODUCING SAME
MODULE À ASSEMBLER AINSI QUE DISPOSITIF DE SUSPENSION POUR RAILS DE SUPPORT ET LEURS PROCÉDÉS DE FABRICATION.

(30) Priorität: 15.03.2011 DE 102011013986
(43) Veröffentlichungstag der Anmeldung: 22.01.2014
(73) Patentinhaber: Protektorwerk Florenz Maisch GmbH & Co. KG, 76571 Gaggenau (DE)
(72) Erfinder: MAISCH, Christof, 76571 Gaggenau (DE)
(74) Vertreter: Manitz, Finsterwald & Partner GbR
(86) Internationale Anmeldenummer: PCT/EP2012/001137
(87) Internationale Veröffentlichungsnummer: WO 2012/123116

(56) Entgegenhaltungen:
- EP-A1- 0 389 152
- EP-A1- 0 557 213
- EP-A1- 1 923 577
- DE-A1- 2 032 658
- DE-U1- 8 902 613
- FR-A1- 2 546 939
- GB-A- 597 172
- US-A- 4 827 687

## Beschreibung

Die vorliegende Erfindung betrifft ein Zusammenbauteil mit einem zumindest bereichsweise flachförmigen ersten Bauteil und mit einem an dem ersten Bauteil befestigten zumindest bereichsweise flachförmigen zweiten Bauteil sowie eine Abhängevorrichtung für Tragschienen, insbesondere für abgehängte Decken oder dergleichen, mit einem Basisteil, das zur Kopplung mit einer Tragschiene ausgebildet ist, und mit einem an dem Basisteil befestigten Verbindungsteil, das zum justierbaren Verbinden des Basisteils mit einem Befestigungsteil ausgebildet ist, gemäß dem jeweiligen Oberbegriff der Ansprüche 1 und 5. Weiterhin ist die Erfindung auf ein Verfahren zur Herstellung eines solchen Zusammenbauteils sowie einer solchen Abhängevorrichtung gerichtet.

Es existiert eine Vielzahl von Anwendungen, in denen zumindest bereichsweise flachförmige Bauteile miteinander zu einem Zusammenbauteil der eingangs genannten Art verbunden werden. Oftmals werden hierfür Niet-, Schraub- oder Schweißverbindungen verwendet, was jedoch einen relativ kostenintensiven zusätzlichen Herstellungsschritt erfordert.

Aus der EP 1 923 577 A1 ist ein mehrteiliges Hitzeschild beschrieben, dessen Einzelteile durch Zusammenstecken miteinander verbunden werden. In der FR 2 546 939 A1 ist ein Abhänger für Tragschienen gemäß dem Oberbegriff des Anspruchs 1 beschrieben, bei dem die Verbindung der einzelnen Bauteile durch gegenseitiges Verdrehen erfolgt. In der DE 89 02 613 U1 und der US 4,827,687 A erfolgt die Verbindung hingegen durch Zusammenstecken in Längs- bzw. in Querrichtung. In der EP 0 557 213 A1 sowie der GB 597 172 A sind Zusammenbauteile beschrieben, bei denen die Einzelteile ebenfalls zusammengesteckt werden, wobei EP 0 557 213 A1 ein Zusammenbauteil gemäß dem Oberbegriff des Anspruchs 5 offenbart.

Bekannten Abhängevorrichtungen der eingangs genannten Art, die in dieser Anmeldung rein beispielhaft als entsprechende Zusammenbauteile beschrieben werden, sind beispielsweise als Schnellspannabhänger mit Feder ausgebildet. Bei diesen Abhängevorrichtungen ist das Verbindungsteil federelastisch ausgebildet und üblicherweise mit dem Basisteil vernietet. Durch die zweiteilige Ausbildung kann das Verbindungsteil aus Federstahl hergestellt werden, während das Basisteil kostengünstig aus einfachem Metallblech hergestellt sein kann. Die Ausbildung des Verbindungsteils aus einem federelastischen Material ist erforderlich, da die Befestigung der Abhängevorrichtung an einer Decke üblicherweise über ein als Abhängestange ausgebildetes Befestigungsteil erfolgt, das durch zwei Öffnungen in dem Verbindungsteil hindurch geschoben und durch die Federspannung des federelastischen Materials mit dem Verbindungsteil verklemmt wird.

Nachteilig an diesen Abhängevorrichtungen ist, dass die Nietverbindung der beiden Teile, wie bereits erwähnt, einen relativ kostenintensiven zusätzlichen Herstellungsschritt erfordert.

Es sind auch einstückig ausgebildete Abhängevorrichtungen bekannt, bei denen dieser kostenintensivere Verbindungsschritt entfallen kann. Bei diesen einstückigen Abhängevorrichtungen ist es jedoch nachteilig, dass diese vollständig aus Federstahl ausgebildet sein müssen, wodurch die Herstellungskosten wiederum erhöht werden.

Weiterhin sind sogenannten Noniusabhänger sowie Schlitzbandabhänger bekannt. Bei den Noniusabhängern umfassen das Basisteil sowie das Verbindungsteil U-Profilabschnitte, in deren seitlichen Schenkeln Nonius-Löcher ausgebildet sind. Zur Verbindung werden die U-Profilabschnitte ineinander gesteckt und mittels durch die Nonius-Löcher hindurchgesteckter und umgebogener Nägel oder dergleichen gegen ein Verschieben gesichert. Bei Schlitzbandabhängern sind das Basisteil und das Verbindungsteil mit Löchern und/oder Schlitzen versehen, so dass sie mittels durch die Löcher und Schlitze geführter Schrauben in unterschiedlichen Längen miteinander verbunden werden können. Bei beiden Varianten ist der obere Bereich des Verbindungsteils unmittelbar als Befestigungsteil ausgebildet, so dass diese Abhänger meist zweiteilig ausgebildet sind.

Da abhängig von der Form der Tragschiene unterschiedliche Kopplungsformen existieren, müssen alle genannten Abhängevorrichtungen in entsprechend vielen Varianten vorgehalten werden, wodurch die Lagerhaltungskosten und damit die Gesamtkosten erhöht werden.

Es ist eine Aufgabe der vorliegenden Erfindung, ein Zusammenbauteil und insbesondere eine Abhängevorrichtung der eingangs genannten Art anzugeben, das einfacher und kostengünstiger als die bekannten Zusammenbauteile hergestellt werden kann. Weiterhin soll ein Verfahren zur Herstellung eines solchen Zusammenbauteils bzw. einer solchen Abhängevorrichtung angegeben werden.

Ausgehend von einem Zusammenbauteil der eingangs genannten Art wird diese Aufgabe erfindungsgemäß durch die Merkmale des Anspruchs 5 gelöst. Eine erfindungsgemäße Abhängevorrichtung ist in Anspruch 1 angegeben.

Ein Verfahren zur Herstellung einer solchen Abhängevorrichtung sowie eines erfindungsgemäßen Zusammenbauteils ist jeweils in den Ansprüchen 14 und 15 angegeben.

Erfindungsgemäß werden zum Befestigen des Verbindungsteils an dem ersten Bauteil somit keine zusätzlichen Elemente, wie beispielsweise Nieten benötigt, sondern die Verbindung erfolgt durch ein Zusammenstecken des ersten und zweiten Bauteils. Zusätzlich wird bei Ausbildung des Zusammenbauteils als Abhängevorrichtung durch die Anordnung der Führungsschlitze quer zur Belastungsrichtung erreicht, dass die bei montierter Abhängevorrichtung aufgrund der Gewichtskraft wirkenden Zugkräfte vollständig von der Verbindung zwischen dem ersten und zweiten Bauteil aufgenommen werden können. Gleichzeitig können auch entsprechende entgegengesetzt gerichtete Druckkräfte aufgenommen werden, die beispielsweise beim Montieren der Abhängevorrichtung auf diese wirken können. Diese Vorteile gelten auch für sonstige Ausgestaltungen des Zusammenbauteils, bei denen eine quer zur Längsrichtung der Führungsschlitze wirkende Belastung vorhanden ist. Durch die Überlappung der Halteabschnitte mit den entsprechenden Überlappungsbereichen wird gleichzeitig ein Reib- und/oder Formschluss in Längsrichtung der Führungsschlitze erreicht, so dass auch in dieser Richtung eine Entkopplung zwischen dem ersten und zweiten Bauteil nur schwer möglich ist und somit eine ungewollte Entkopplung vermieden wird.

Durch die parallele Anordnung der Führungsschlitze wird eine sichere Führung des ersten und zweiten Bauteils beim Zusammenstecken erreicht.

Nach einer weiteren vorteilhaften Ausführungsform der Erfindung verlaufen die in dem Basisteil und/oder die in dem Verbindungsteil ausgebildeten Führungsschlitze senkrecht zur Belastungsrichtung. Dadurch wird sowohl bei Zug- als auch bei Druckbelastung eine optimale Kraftübertragung zwischen dem Basisteil und dem Verbindungsteil erreicht.

Nach einer weiteren vorteilhaften Ausführungsform der Erfindung sind die in dem ersten Bauteil und/oder die in dem zweiten Bauteil ausgebildeten Führungsschlitze jeweils an einem Ende offen ausgebildet. Die Führungsschlitze können auch an beiden Enden geschlossen ausgebildet sein, wobei in diesem Fall jedoch die beiden Führungsschlitze über einen weiteren Schlitz miteinander verbunden sind. In beiden Fällen sind die Führungsschlitze vorteilhaft über eine Verbindungskante miteinander verbunden, die sich ggf. vorteilhaft in Belastungsrichtung erstreckt.

Nach einer weiteren vorteilhaften Ausführungsform umfassen die Führungsschlitze jeweils zumindest eine Führungskante. Entlang der Führungskante erfolgt das Zusammenstecken des ersten und des zweiten Bauteils und gleichzeitig wird von der Führungskante die beispielsweise bei montierter Abhängevorrichtung auftretende Kraft aufgenommen.

Bevorzugt besitzt das Basisteil und/oder das Verbindungsteil eine lang gestreckte, insbesondere sich quer zur Längsrichtung der Führungsschlitze erstreckende Form. Dadurch wird für das Zusammenbauteil ein minimaler Materialbedarf erreicht.

Nach einer weiteren vorteilhaften Ausführungsform der Erfindung liegen die sich überlappenden Halteabschnitte und Überlappungsbereiche des ersten Bauteils und/oder des zweiten Bauteils jeweils zumindest bereichsweise flächig aneinander an und bilden einen doppellagigen Bereich des Zusammenbauteils. Dadurch wird eine Versteifung des Zusammenbauteils erreicht und gleichzeitig die Reibung zwischen dem ersten und dem zweiten Bauteil erhöht. Grundsätzlich ist auch eine linienförmige oder punktförmige Anlage möglich.

Nach einer weiteren vorteilhaften Ausführungsform der Erfindung ist zumindest einer der Halteabschnitte an dem ihm zugeordneten Überlappungsbereich gegen ein Entkoppeln entgegen der Zusammensteckrichtung gesichert. Dabei kann der Halteabschnitt insbesondere mit dem Überlappungsbereich verrastet sein. Dazu ist vorteilhaft an dem Halteabschnitt des zweiten Bauteils zumindest ein Rastelement ausgebildet, das mit zumindest einem an dem Überlappungsbereich des ersten Bauteils ausgebildeten Gegenelement zusammenwirkt. Alternativ oder zusätzlich kann ein entsprechendes Rastelement auch an dem Halteabschnitt des ersten Bauteils ausgebildet sein, das mit zumindest einem an dem Überlappungsbereich des zweiten Bauteils ausgebildeten Gegenelement zusammenwirkt.

Durch die Verrastung wird zusätzlich zu dem beschriebenen Reib- und/oder Formschluss in Längsrichtung der Führungsschlitze eine noch bessere Sicherung gegen ein Entkoppeln des ersten und zweiten Bauteils geschaffen.

Vorteilhaft ist zumindest eines der Gegenelemente als Vertiefung oder als Erhöhung ausgebildet. Bevorzugt kann dabei das Rastelement in die Vertiefung eingreifen bzw. die Erhöhung übergreifen. In einer besonders einfachen Ausgestaltung können das Rastelement und/oder das Gegenelement als sich insbesondere quer zur Längsrichtung der Führungsschlitze erstreckende Sicke ausgebildet sein. Diese Sicke kann zusätzlich eine Versteifungswirkung erzeugen.

Nach einer weiteren vorteilhaften Ausführungsform der Erfindung ist das zweite Bauteil federelastisch und/oder U-förmig ausgebildet. Bei einer Abhängevorrichtung kann bei dieser Ausgestaltung das Befestigungsteil mit dem zweiten Bauteil in bekannter Weise, beispielsweise über in Schenkeln des U-förmigen zweiten Bauteils ausgebildete Löcher oder Schlitze, verbunden sein.

Das zweite Bauteil kann aus federelastischem Metall, insbesondere aus Federstahl bestehen, während das erste Bauteil aus Metall, beispielsweise aus einfachem Metallblech bestehen kann. Grundsätzlich können das erste und/oder das zweite Bauteil auch aus anderen geeigneten Materialien, beispielsweise aus Kunststoff bestehen.

Nach einer weiteren vorteilhaften Ausführungsform der Erfindung ist bei einer Abhängevorrichtung das Verbindungsteil zumindest bereichsweise als Schlitz- oder Lochband, als Noniusprofil oder als Schnellspannfederprofil ausgebildet. Bevorzugt ist das Befestigungsteil zumindest bereichsweise als Schlitz- oder Lochband, als Noniusprofil oder stangenförmig ausgebildet. Auch die Ausbildung als sonstige bekannte Abhängeart ist grundsätzlich möglich. Somit kann die Verstellung und Justierung der erfindungsgemäß ausgebildeten Abhängevorrichtungen in bekannter Weise erfolgen, nachdem Basisteil und Verbindungsteil über die erfindungsgemäße Steckverbindung miteinander verbunden wurden.

Weitere vorteilhafte Ausführungsformen der Erfindung sind in den Unteransprüchen angegeben.

Die Erfindung wird nachfolgend rein beispielhaft anhand von als Abhängevorrichtungen ausgebildeten Ausführungsbeispielen unter Bezugnahme auf die Zeichnungen näher beschrieben; in diesen zeigen:
- Fig. 1: eine perspektivische Darstellung einer Abhängevorrichtung nach dem Stand der Technik,
- Fig. 2: eine perspektivische Darstellung einer weiteren Abhängevorrichtung nach dem Stand der Technik,
- Fig. 3: eine schematische Vorderansicht eines Verbindungsteils sowie eine Teilansicht eines Basisteils einer erfindungsgemäß ausgebildeten Abhängevorrichtung vor dem Zusammenbau der Abhängevorrichtung,
- Fig. 4: eine Teilansicht der erfindungsgemäß ausgebildeten Abhängevorrichtung aus Fig. 3 nach dem Zusammenbau,
- Fig. 5: eine Seitenansicht der Abhängevorrichtung nach Fig. 4,
- Fig. 6: ein Basisteil sowie ein Verbindungsteil einer weiteren Ausführungsform der Erfindung in noch nicht zusammengebauten Zustand jeweils in Vorderansicht und
- Fig. 7: die Abhängevorrichtung nach Fig. 6 im zusammengebauten Zustand in einer Ansicht von hinten
- Fig. 8: eine perspektivische Ansicht einer weiteren Ausführungsform der Erfindung im entkoppelten Zustand,
- Fig. 9: eine perspektivische Ansicht einer weiteren Ausführungsform der Erfindung im entkoppelten Zustand,
- Fig. 10: eine Draufsicht auf die Abhängevorrichtung nach Fig. 9,
- Fig. 11: eine Vorderansicht des Basisteils der Ausführungsform nach Fig. 9,
- Fig. 12: eine perspektivische Ansicht der Ausführungsform nach Fig. 9 im zusammengesetzten Zustand,
- Fig. 13: eine Darstellung von drei Abhängevorrichtungen nach dem Stand der Technik,
- Fig. 14: eine Teilansicht eines erfindungsgemäß ausgebildeten Verbindungselements,
- Fig. 15: eine Teilansicht eines weiteren erfindungsgemäß ausgebildeten Verbindungselements,
- Fig. 16: eine abgewandelte Ausführungsform des Federabhängers aus Fig. 8,
- Fig. 17: zwei erfindungsgemäß ausgebildete C-Profile und
- Fig. 18: einen Querschnitt durch die zwei C-Profile aus Fig. 17 im zusammengesetzten Zustand.

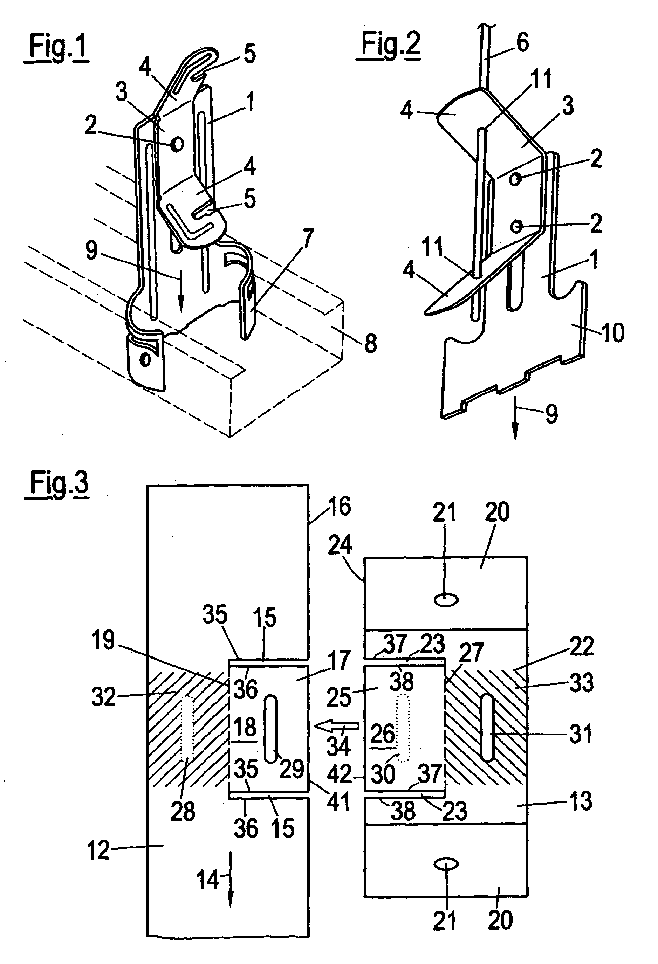

Fig. 1 zeigt eine bekannte Abhängevorrichtung, die ein Basisteil 1 sowie ein an dem Basisteil 1 über eine Niete 2 befestigtes Verbindungsteil 3 umfasst. Das Verbindungsteil besitzt einen U-förmigen Längsschnitt mit zwei Schenkeln 4, in denen schlitzförmige Öffnungen 5 ausgebildet sind, in die ein stangenförmiges Befestigungsteil 6 (siehe Fig. 2) seitlich eingeschoben werden kann.

Während das Basisteil 1 üblicherweise aus einfachem Metallblech besteht, ist das Verbindungsteil 3 aus Federstahl ausgebildet, um das Befestigungsteil 6 sicher in den Öffnungen 5 zu halten. Dazu werden zunächst die beiden Schenkel 4 aufeinander zu gebogen und nach Einsetzen des Befestigungsteils 5 in die Öffnungen 5 wieder freigegeben, so dass das Befestigungsteil 6 in den Öffnungen 5 aufgrund der Federvorspannung des Verbindungsteils 3 eingeklemmt wird. Das obere Ende des Befestigungsteils 6 kann dann in üblicher Weise an einer Decke befestigt werden, so dass letztlich die gesamte Abhängevorrichtung an der Decke sicher befestigt ist.

Am unteren Ende des Basisteils 1 ist ein Kopplungsabschnitt 7 ausgebildet, der zur Kopplung mit einer gestrichelt dargestellten Tragschiene 8 ausgebildet ist. An der Tragschiene 8 können weitere quer verlaufende Tragschienen ausgebildet sein, die beispielsweise zum Tragen von Platten für abgehängte Decken ausgebildet sind.

Bei montierter Abhängevorrichtung werden das Basisteil 1 sowie das Verbindungsteil 2 durch das Gewicht der Tragschiene 8 sowie der von dieser getragenen Elemente in einer durch einen Pfeil 9 dargestellten Belastungsrichtung belastet.

Fig. 2 zeigt eine weitere Abhängevorrichtung nach dem Stand der Technik, die sich von der Abhängevorrichtung nach Fig. 1 durch einen abgewandelten Kopplungsabschnitt 10 sowie abgewandelte Öffnungen 11 in den Schenkeln 4 des Verbindungsteils 3 unterscheidet. Die Öffnungen 11 sind bei der Ausgestaltung nach Fig. 2 nicht seitlich offen ausgebildet, so dass das Befestigungsteil 6 nicht seitlich eingeführt werden kann, sondern durch die Öffnungen 5 hindurch gesteckt werden muss. Weiterhin ist das Verbindungsteil 3 bei der Abhängevorrichtung nach Fig. 2 über zwei Nieten 2 mit dem Basisteil 1 verbunden.

Grundsätzlich entsprechen der Aufbau und insbesondere die Befestigung des Verbindungsteils 3 an dem Basisteil 1 bei der Ausgestaltung nach Fig. 2 jedoch der Ausgestaltung nach Fig. 1, so dass ähnliche oder gleiche Elemente mit den gleichen Bezugszeichen wie in Fig. 1 bezeichnet sind.

In Fig. 3 ist ein Basisteil 12 sowie ein Verbindungsteil 13 einer ersten Ausführungsform einer erfindungsgemäß ausgebildeten Abhängevorrichtung dargestellt. Das Basisteil 12 ist aus flachförmigem Metallblech hergestellt, wobei in Fig. 3 lediglich der obere Bereich des Basisteils 12 dargestellt ist, während der sich in Fig. 3 am unteren Ende anschließende Kopplungsabschnitt nicht dargestellt ist. Grundsätzlich kann ein Kopplungsabschnitt des Basisteils 12 entsprechend den aus dem Stand der Technik bekannten Kopplungsabschnitten beispielsweise gemäß den Kopplungsabschnitten 7 oder 10 gemäß Fig. 1 und 2 ausgebildet sein. Der Kopplungsabschnitt kann dabei einstückig mit dem dargestellten Teil des Basisteils 12 oder auch davon getrennt ausgebildet sein und an diesem befestigt sein.

Das Basisteil 12 besitzt eine lang gestreckte Form, die sich im Wesentlichen in Richtung der durch einen Pfeil 14 angedeuteten Belastungsrichtung erstreckt. Die Belastungsrichtung gibt dabei wiederum die Richtung der Belastung des Basisteils 12 und des Verbindungsteils 13 im montierten Zustand der Abhängevorrichtung an.

Etwa im Mittelbereich des Basisteils 12 sind zwei quer zur Belastungsrichtung 14 verlaufende Führungsschlitze 15 ausgebildet, die parallel zueinander verlaufen und zum rechten Rand 16 des Basisteils 12 hin offen ausgebildet sind. Die offenen Enden der Führungsschlitze 15 sind durch eine Verbindungskante 41 miteinander verbunden. Der zwischen den Führungsschlitzen 15 angeordnete Bereich 17 des Basisteils 12 bildet einen Halteabschnitt 18 des Basisteils 12, der entlang einer die beiden innen liegenden Enden der Führungsschlitze 15 verbindenden gestrichelten Linie 19 gegenüber dem restlichen Teil des Basisteils 12 heraus gebogen ist, so dass der Halteabschnitte 18 aus der Zeichnungsebene in Fig. 3 nach oben herausragt. Der im Bereich der gestrichelten Linie 19 liegende Teil des Basisteils 12 bildet eine Kröpfung, so dass der nach oben heraus gebogene Halteabschnitt 18 im Wesentlichen parallel, jedoch versetzt zu dem restlichen Bereich des Basisteils 12 angeordnet ist.

Das Verbindungsteil 13 besitzt einen U-förmigen Aufbau mit zwei Schenkeln 20, in denen jeweils kreisförmige Öffnungen 21 ausgebildet sind. Die Schenkel 20 sind schräg gegenüber dem Mittelteil 22 des Verbindungsteils 13 nach oben aus der Zeichnungsebene heraus gebogen, so dass die Öffnungen 21 in Fig. 3 als ovale Öffnungen dargestellt sind. Diesbezüglich entspricht der Aufbau des Verbindungsteils 13 dem in Fig. 2 dargestellten Verbindungsteil 3. Grundsätzlich kann betreffend die Ausgestaltung der Schenkel 20 bzw. der Löcher 21 das Verbindungsteil 13 auch beispielsweise wie in Fig. 1 dargestellt ausgebildet sein. Insbesondere können die Löcher 21 auch als seitlich offene Schlitze ausgebildet sein. Auch sonstige, aus dem Stand der Technik bekannte Ausgestaltungen des Verbindungsteils 13 sind diesbezüglich möglich.

Im Gegensatz zu den bekannten Verbindungsteilen sind bei dem Verbindungsteil 13 in dem die beiden Schenkel 20 verbindenden Mittelteil 22 zwei Führungsschlitze 23 ausgebildet, die parallel zueinander verlaufen und zum linken Rand 24 des Verbindungsteils 13 hin offen ausgebildet sind, wo sie über einen Verbindungskante 42 miteinander verbunden sind. Der zwischen den Führungsschlitzen 23 liegende Bereich 25 des Verbindungsteils 13 bildet einen Halteabschnitt 26 des Verbindungsteils 13 und ist entlang einer gestrichelten Linie 27 so abgewinkelt, dass der Halteabschnitt 26 in die Zeichnungsebene hinein parallel versetzt ist und im Bereich der gestrichelten Linie 27 wiederum eine Kröpfung ausgebildet ist.

Sowohl in dem Basisteil 12 als auch in dem Verbindungsteil 13 sind Sicken 28, 29, 30, 31 ausgebildet, wobei die gestrichelt dargestellten Sicken 28, 30 sich jeweils in die Zeichnungsebene hinein erstrecken, während sich die mit durchgezogenen Linien dargestellten Sicken 29, 30 sich aus der Zeichnungsebene heraus erheben. Wie es anhand der folgenden Figuren noch näher ausgeführt wird, bilden der sich quer zur Belastungsrichtung 14 an den Halteabschnitt 18 anschließende Bereich des Basisteils 12 einen Überlappungsbereich 32, der in Fig. 3 schraffiert dargestellt ist und in dem die Sicke 28 angeordnet ist.

In entsprechender Weise bildet der sich quer zur Belastungsrichtung 14 an den Halteabschnitt 26 anschließende Bereich des Verbindungsteils 13 einen Überlappungsbereich 33, der ebenfalls schraffiert dargestellt ist und in dem die Sicke 31 angeordnet ist. Die Überlappungsbereiche 32, 33 schließen sich jeweils unmittelbar an die Halteabschnitte 18, 26 an, d.h. dass die die innen liegenden Enden der Führungsschlitze 15 bzw. 23 verbindenden gestrichelten Linien 19, 27 jeweils die Trennlinie zwischen den Überlappungsbereichen 32, 33 und den unmittelbar benachbarten Halteabschnitten 18, 26 bilden.

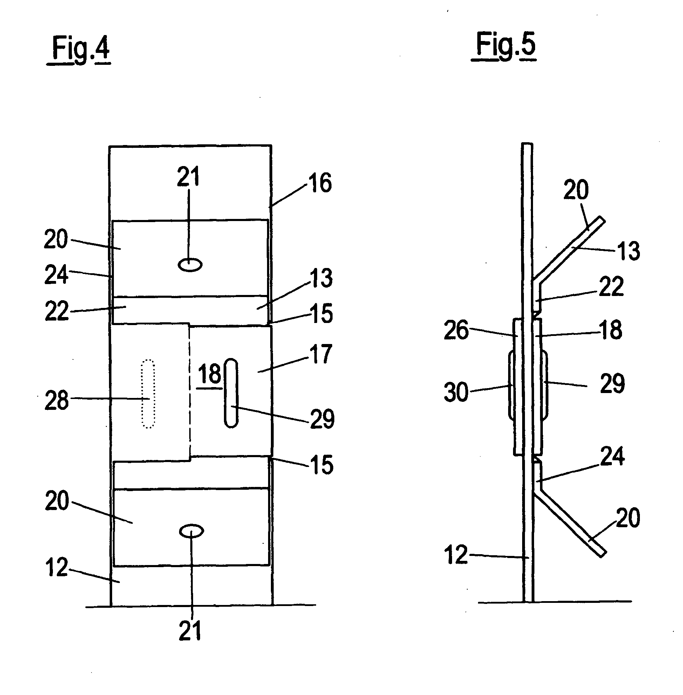

Das Basisteil 12 und das Verbindungsteil 13 können gemäß einem Pfeil 34 zusammengesteckt werden, bis der in den Fig. 4 und 5 dargestellte zusammengesetzte Zustand der Abhängevorrichtung erreicht ist. In diesem zusammengesetzten Zustand wird der Überlappungsbereich 33 des Verbindungsteils 13 von dem Halteabschnitt 18 des Basisteils 12 überlappt. Gleichzeitig erfolgt dabei eine Verrastung des Halteabschnitts 18 mit dem Überlappungsbereich 33 über die Sicken 29, 31, die so angeordnet sind, dass die sich aus der Zeichnungsebene heraus erhebende Sicke 31 in die entsprechende an der Rückseite des Halteabschnitts 18 ausgebildete, durch die Sicke 29 geformte Vertiefung eingreift.

In analoger Weise wird an der Rückseite der Abhängevorrichtung der Überlappungsbereich 32 des Basisteils 12 von dem Halteabschnitt 26 des Verbindungsteils 13 überlappt, wobei gleichzeitig in analoger Weise eine Verrastung über die Sicken 28, 30 erfolgt.

Im zusammengesetzten Zustand sind somit das Basisteil 12 und das Verbindungsteil 13 über die verrasteten Sicken 28 bis 31 gegen ein Entkoppeln quer zur Belastungsrichtung 14 gesichert.

In Belastungsrichtung 14 sowie entgegen der Belastungsrichtung 14 sind das Basisteil 12 und das Verbindungsteil 13 ebenfalls gegen eine Relativverschiebung gesichert, da im zusammengesetzten Zustand die durch die Schlitze 15, 23 gebildeten Kanten 35, 36, 37, 38 aneinander zur Anlage kommen und ein Verschieben in oder gegen die Belastungsrichtung 14 verhindern. Zusätzlich wirken die Kanten 35 bis 38 beim Zusammenstecken des Basisteils 12 und des Verbindungsteils 13 als Führungskanten, so dass ein automatisiertes Zusammenstecken erleichtert wird.

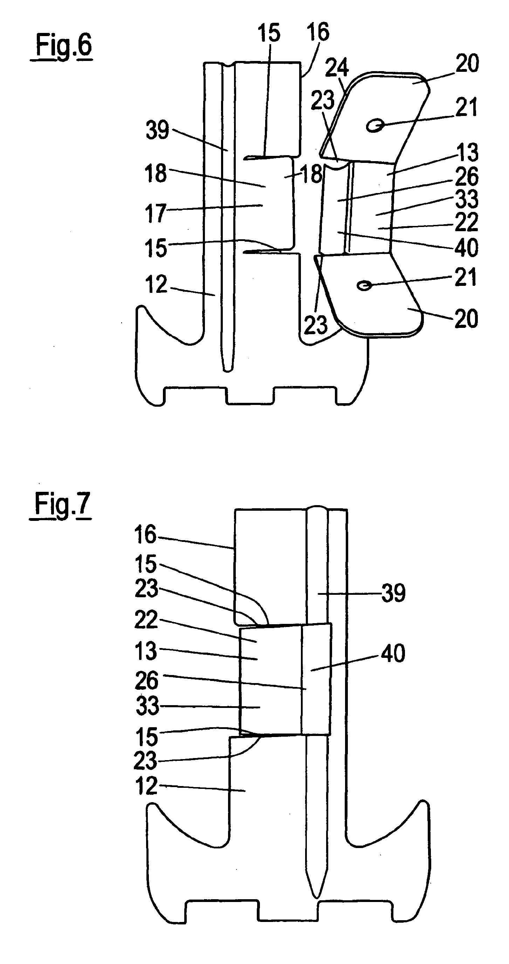

Das in den Fig. 6 und 7 dargestellte zweite Ausführungsbeispiel ist grundsätzlich entsprechend dem Ausführungsbeispiel nach den Fig. 3 bis 5 ausgebildet, so dass ähnliche oder gleiche Elemente mit den gleichen Bezugszeichen wie in den Fig. 3 bis 5 bezeichnet werden.

Das Ausführungsbeispiel nach den Fig. 6 und 7 unterscheidet sich im Wesentlichen gegenüber dem bereits beschriebenen Ausführungsbeispiel dadurch, dass die Knickkanten zur Bildung der Schenkel 20 unmittelbar mit den Führungsschlitzen 23 fluchten, so dass der Mittelbereich 22 des Verbindungsteils 13 durch den Abstand der Führungsschlitze 23 definiert wird.

Weiterhin ist bei dem Ausführungsbeispiel nach den Fig. 6 und 7 die Verrastung zwischen dem Basisteil 12 und dem Verbindungsteil 13 durch eine deutlich längere Sicke 39 ausgebildet, die sich annähernd über die ganze Länge des Basisteils 12 erstreckt. Entsprechend besitzt bei dem Ausführungsbeispiel nach den Fig. 6 und 7 der gesamte Halteabschnitt 26 eine zu der Sicke 39 im Querschnitt annähernd komplementär ausgebildete Sicke 40, so dass im zusammengesetzten Zustand, wie in Fig. 7 dargestellt, der Halteabschnitt 26 über seinen gesamten Bereich die Sicke 39 übergreift. Grundsätzlich kann auch bei dieser Ausgestaltung zusätzlich noch eine entsprechende Rastverbindung zwischen dem Halteabschnitt 18 des Basisteils 12 und dem Überlappungsbereich 33 des Verbindungsteils 13 vorgesehen sein.

Die Rastverbindungen können grundsätzlich auch in anderer Weise ausgestaltet sein, beispielsweise als Noppen oder ähnliche Erhebungen, die in entsprechend ausgebildete Vertiefungen oder Öffnungen eingreifen.

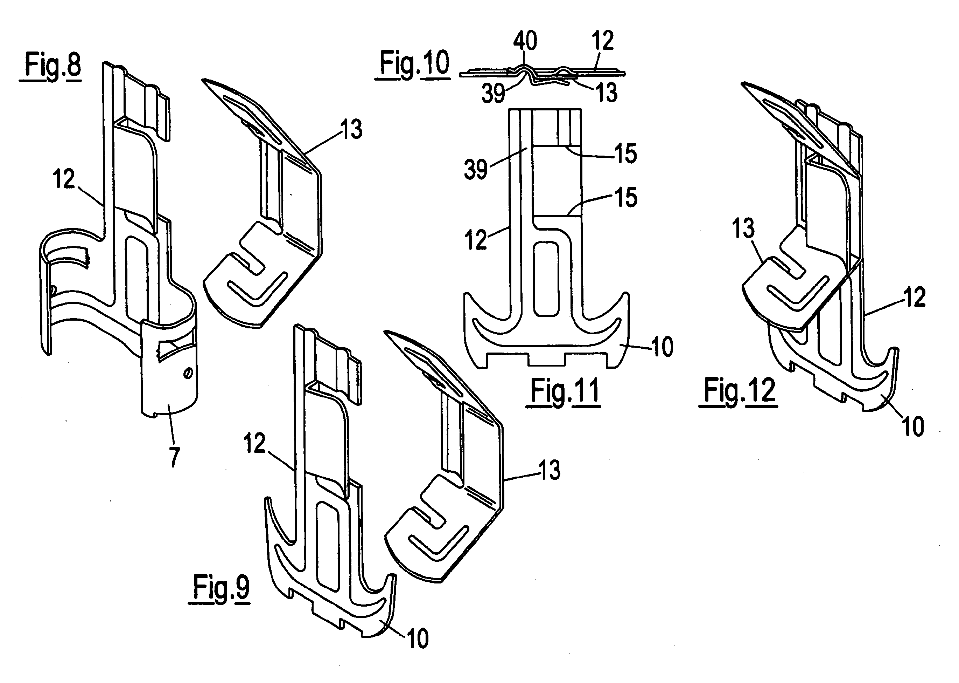

Aus den Fig. 8 und 9 ist ersichtlich, dass je nach Ausbildung der Tragschiene unterschiedliche Basisteile 12 mit entsprechend an die Tragschiene angepassten Kopplungsabschnitten 7, 10 vorgesehen sein können. Das Verbindungsteil 13 kann dabei erfindungsgemäß jeweils identisch ausgebildet sein, so dass die Lagerhaltungskosten verringert werden können.

In der Draufsicht nach Fig. 10 sind die beiden Schenkel 20 des Verbindungsteils 13 weggelassen, um die Steckverbindung zwischen dem Basisteil 12 und dem Verbindungsteil 13 besser erkennen zu können. Aus dieser Ansicht ist insbesondere die Verrastung zwischen dem Basisteil 12 und dem Verbindungsteil 13 über die Sicken 39, 40 deutlich erkennbar.

Aus der Vorderansicht des Basisteils 12 nach Fig. 11 sind deutlich die beiden Führungsschlitze 15 zu erkennen, über die das Basisteil 12 und das Verbindungsteil 13 zusammengesteckt werden, bis der in Fig. 12 dargestellte zusammengesteckte Zustand erreicht ist.

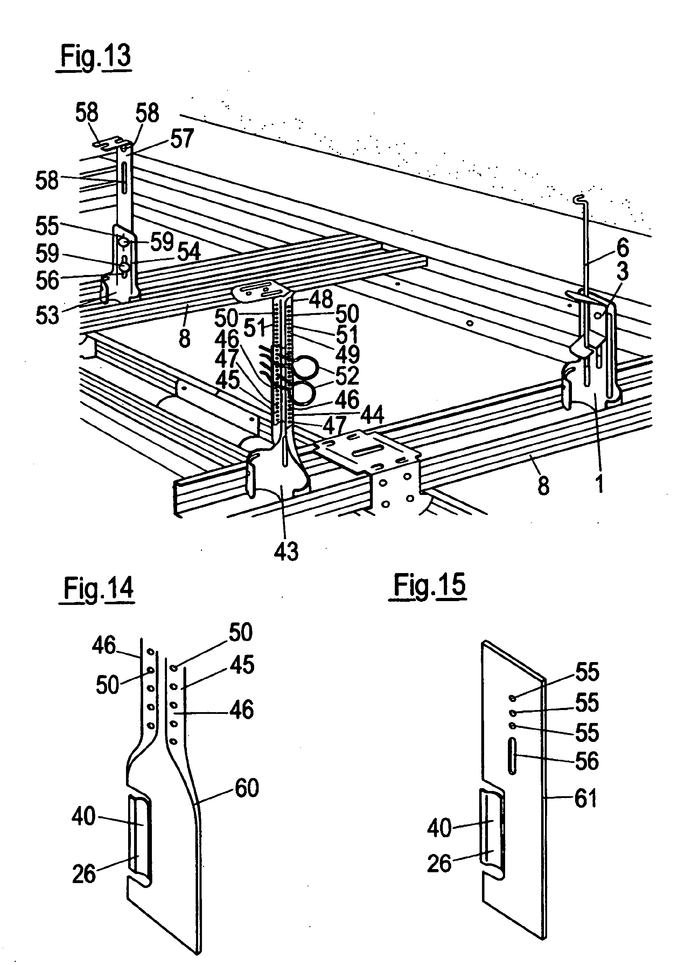

Fig. 13 zeigt drei unterschiedliche, aus dem Stand der Technik bekannte Abhängevorrichtungen, nämlich einen Schlitzbandabhänger, einen Noniusabhänger und einen Schnellspannabhänger mit Feder, die jeweils mit einer Tragschiene 8 gekoppelt sind.

Der Noniusabhänger umfasst ein Basisteil 43, dessen oberer Bereich als Verbindungsteil 44 mit einem U-Profilabschnitt 45 ausgebildet ist. Der U-Profilabschnitt 45 besitzt zwei Schenkel 46, in denen jeweils eine Vielzahl von Löchern 47 ausgebildet ist. Weiterhin ist ein Befestigungsteil 48 vorgesehen, das einen U-Profilabschnitt 49 aufweist, der mit Löchern 50 versehene Schenkel 51 umfasst. Zum Verbinden von Basisteil 43 und Verbindungsteil 44 sind die beiden U-Profilabschnitte 45, 49 so zusammengesteckt, dass Löcher 47, 50 aufeinander zu liegen kommen und der Abhänger die gewünschte Länge besitzt. Durch die Löcher 45, 50 sind Federclipse 52 gesteckt, so dass das Basisteil 45 und das Verbindungsteil 44 fest miteinander verbunden sind. Das obere Ende des Befestigungsteils 48 kann dann in bekannter Weise an einer Decke befestigt werden.

In ähnlicher Weise umfasst der Schlitzbandabhänger ein Basisteil 53, dessen oberer Bereich als Verbindungsteil 54 mit Löchern 55 und/oder Schlitzen 56 ausgebildet ist. Weiterhin ist ein Befestigungsteil 57 vorgesehen, das als Loch- oder Schlitzband mit Löchern und/oder Schlitzen 58 ausgebildet ist. Zum Verbinden von Basisteil 53 und Verbindungsteil 54 werden die beiden Teile so aufeinander gelegt, dass Löcher 55 und Schlitze 56, 58 aufeinander zu liegen kommen und der Abhänger die gewünschte Länge besitzt. Anschließend werden die beiden Teile mit durch die Löcher/Schlitze 55, 56, 58 hindurch ragenden Schrauben 59 oder ähnlichen Verbindungsmitteln miteinander verbunden. Das obere Ende des Befestigungsteils 57 kann dann in bekannter Weise an einer Decke befestigt werden.

Der dargestellte Schnellspannabhänger umfasst ein Basisteil 1 und ein Verbindungsteil 3, die gemäß Fig. 1 ausgebildet sind und über ein als Abhängestange ausgebildetes Befestigungsteil 6 an der Decke befestigt werden können, wie es bereits zur Fig. 1 beschrieben wurde.

Während zu den Fig. 3 bis 12 verschiedene Ausführungen ein erfindungsgemäßer Schnellspannabhänger beschrieben wurden, sind in den Fig. 14 und 15 jeweils Teilansichten von Verbindungsteilen 13', 13" dargestellt, mit denen erfindungsgemäße Noniusabhänger bzw. Schlitzbandabhänger entsprechend den in Fig. 13 dargestellten Abhängern gebildet werden können.

So ist das in Fig. 14 dargestellte Verbindungsteil 60 in seinem oberen Bereich entsprechend dem Verbindungsteil 44 des Noniusabhängers aus Fig. 13 als U-Profilabschnitt 45 mit Schenkeln 46 und Löchern 50 ausgebildet. Dadurch ist eine Verbindung mit einem üblichen Befestigungsteil 48 gemäß Fig. 13 möglich. Im unteren Bereich des Verbindungsteils 60 ist entsprechend den Fig. 6 bis 12 ein Halteabschnitt 26 mit Sicke 40 ausgebildet, so dass das Verbindungsteil 60, je nach Ausbildung der abzuhängenden Tragschiene 8, mit einem der zuvor beschriebenen Basisteile zusammengesteckt werden kann. Der Halteabschnitt 26 kann selbstverständlich auch analog dem Halteabschnitt 26 nach den Fig. 3 bis 5 ausgebildet sein.

Fig. 15 zeigt hingegen ein Verbindungsteil 61, dessen oberer Bereich entsprechend dem Verbindungsteil 54 des Schlitzbandabhängers aus Fig. 13 als Loch- oder Schlitzband mit Löchern 55 und Schlitzen 56 ausgebildet ist. Das Verbindungsteil 61 kann dadurch mit einem üblichen Befestigungsteil 57 gemäß Fig. 13 verbunden werden. Im unteren Bereich ist das Verbindungsteil 61 entsprechend dem Verbindungsteil 60 aus Fig. 14 ausgebildet und kann somit in gleicher Weise mit einem zuvor beschriebenen Basisteil zusammengesteckt werden.

Selbstverständlich können die unterschiedlichen Ausgestaltungen der Basisteile und Verbindungsteile (Kopplungsabschnitt, Halteabschnitt und die Verbindung mit dem Befestigungsteil) je nach Bedarf in beliebiger Weise miteinander kombiniert werden.

Obwohl in den Ausführungsbeispielen die Führungsschlitze jeweils zu einem Rand des Basisteils bzw. des Verbindungsteils hin offen ausgebildet sind und dadurch der jeweilige Rand durch die Führungsschlitze unterbrochen wird, müssen sich die Führungsschlitze nicht bis zu dem jeweiligen Rand hin erstrecken. Die Führungsschlitze können auch vollständig innerhalb des flächigen Bereichs des Basisteils bzw. des Verbindungsteils angeordnet sein, so dass der jeweilige Rand des Basisteils bzw. des Verbindungsteils nicht unterbrochen ist. Jeweils ein Ende eines Führungsschlitzes muss dann mit einem gegenüberliegenden Ende des anderen Führungsschlitzes über einen weiteren Schlitz verbunden sein, wodurch eine die Führungsschlitze verbindende Verbindungskante gebildet wird, die ein Zusammenstecken von Basisteil und Verbindungsteil ermöglicht.

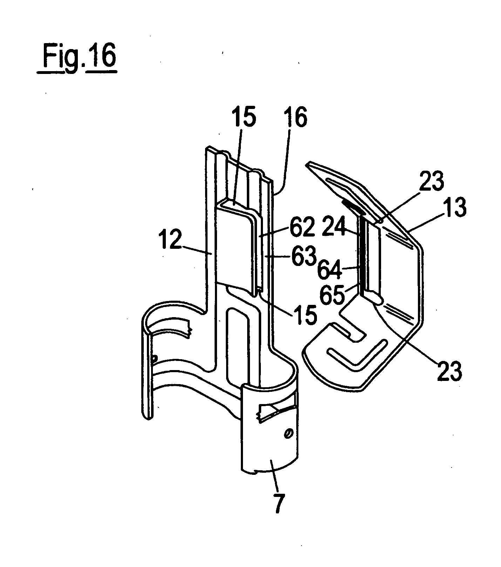

Eine entsprechende Abhängevorrichtung ist in Fig. 16 gezeigt. Der Federabhänger gemäß Fig. 16 unterscheidet sich von dem Federabhänger nach Fig. 8 dadurch, dass sich die Führungsschlitze 15 jeweils nicht bis zum Rand 16 des Basisteils 12 erstrecken, sondern vorher enden. Die Führungsschlitze 15 sind somit jeweils an ihren beiden Enden geschlossen ausgebildet und an ihren zu dem Rand 16 weisenden Enden über einen weiteren Schlitz 62 miteinander verbunden. Der weitere Schlitz 62 verläuft parallel zu dem Rand 16 und berandet einen Verstärkungssteg 63 des Basisteils, der einen oberen und einen unteren Bereich des Basisteils 12 miteinander verbindet und nach außen durch den Rand 16 berandet ist. Durch den Verstärkungssteg 63 wird die Stabilität des Basisteils 12 insbesondere in Belastungsrichtung weiter erhöht.

In analoger Weise können auch die Führungsschlitze 23 des Verbindungsteils 13 beidseitig geschlossen ausgebildet sein, wie es ebenfalls in Fig. 16 dargestellt ist. Die zu dem Rand 24 des Verbindungsteils 13 weisenden Enden der Führungsschlitze 23 sind durch einen weiteren Schlitz 64 miteinander verbunden, der parallel zu dem Rand 24 verläuft und einen Verstärkungssteg 65 berandet, durch den die Schenkel 20 des Verbindungsteil im Bereich des Rands 24 miteinander verbunden werden. Durch den Verstärkungssteg 65 wird die Stabilität des Verbindungsteils 13 insbesondere in Belastungsrichtung erhöht.

Grundsätzlich können nur das Basisteil 12, nur das Verbindungsteil 13 oder beide Teile mit einem entsprechenden Verstärkungssteg versehen sein. Außerdem können entsprechende Verstärkungsstege bei allen Ausführungsformen der Erfindung vorgesehen werden.

Bei den erfindungsgemäß ausgebildeten Zusammenbauteilen kann auf eine kostenintensive Vernietung des ersten und zweiten Bauteils verzichtet werden, da diese über die beschriebene Steckverbindung miteinander verbunden werden. Durch die Steckverbindung wird eine hohe Kraftübertragung quer zur Längsrichtung der Führungsschlitze erreicht, wobei zusätzlich eine Entkopplung in Längsrichtung der Führungsschlitze durch einen entsprechenden Reibschluss sowie optionale Rastverbindungen verhindert wird.

Obwohl die Erfindung beispielhaft anhand von Abhängevorrichtungen näher beschrieben wurde, ist ein erfindungsgemäßes Zusammenbauteil vielfältig auch in anderen Bereichen einsetzbar.

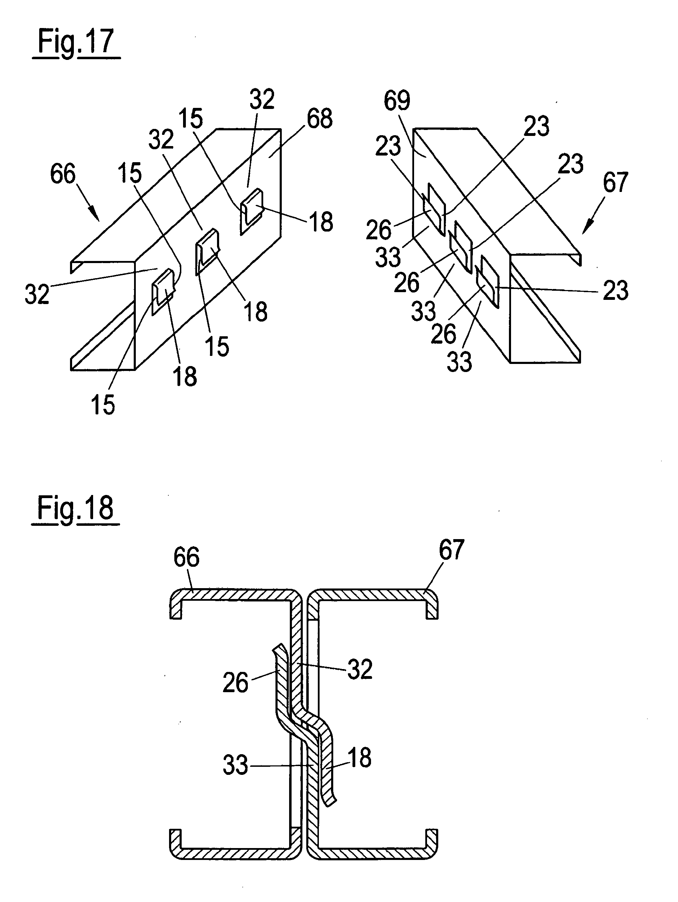

So sind in Fig. 17 beispielsweise zwei C-Profile 66, 67 gezeigt, die ebenfalls gemäß der Erfindung ausgebildet sind und zusammen gesteckt werden können. Dazu sind in den Stegen 68, 69 der C-Profile 66, 67 jeweils Führungsschlitze 15 bzw. 23 ausgebildet, zwischen denen Halteabschnitte 18, 26 gebildet werden, die aus der Ebene der Stege als im Wesentlichen parallel zu den Stegen 69, 69 verlaufenden Stecklaschen herausgebogen sind. Die C-Profile 66, 67 können analog zu den zuvor beschriebenen Ausführungsbeispielen zusammengesteckt werden, so dass die C-Profile 68, 68 Rücken an Rücken aneinander anliegen und ohne separate Verbindungsmittel zu einer Einheit miteinander verbunden sind.

Aus dem in Fig. 18 dargestellten Querschnitt durch die miteinander verbundenen C-Profile 68, 69 ist ersichtlich, dass die Halteabschnitte 26 des C-Profils 67 die Überlappungsabschnitte 32 des C-Profils 66 überlappen. In entsprechender Weise überlappen die Halteabschnitte 18 des C-Profils 66 die Überlappungsabschnitte 33 des C-Profils 67, so dass eine sichere Verbindung der beiden C-Profile 66, 67 erzeugt wird.

Anstelle von C-Profilen können auch sonstige Profile, wie beispielsweise U-, H-, Z- oder Hut-Profile oder sonstige bereichsweise flachförmige Bauteile miteinander verbunden werden. Dabei können die entsprechenden Verbindungselemente jeweils alle zu den zuvor erläuterten Ausführungsformen beschriebenen zusätzlichen Merkmale wie Sicken, Kröpfungen, Verrastungen, Nuten und dergleichen in Alleinstellung oder in Kombination umfassen.

### Bezugszeichenliste

- 1: Basisteil
- 2: Niete
- 3: Verbindungsteil
- 4: Schenkel
- 5: Öffnungen
- 6: Befestigungsteil
- 7: Kopplungsabschnitt
- 8: Tragschiene
- 9: Pfeil (Belastungsrichtung)
- 10: Kopplungsabschnitt
- 11: Öffnungen
- 12: Basisteil
- 13: Verbindungsteil
- 14: Pfeil (Belastungsrichtung)
- 15: Führungsschlitze
- 16: Rand des Basisteils
- 17: Bereich des Basisteils
- 18: Halteabschnitt des Basisteils
- 19: gestrichelte Linie
- 20: Schenkel
- 21: Öffnungen
- 22: Mittelteil des Verbindungsteils
- 23: Führungsschlitze
- 24: Rand des Verbindungsteils
- 25: Bereich des Verbindungsteils
- 26: Halteabschnitt des Verbindungsteils
- 27: gestrichelte Linie
- 28: Sicke
- 29: Sicke
- 30: Sicke
- 31: Sicke
- 32: Überlappungsbereich des Basisteils
- 33: Überlappungsbereich des Verbindungsteils
- 34: Pfeil
- 35: Kante
- 36: Kante
- 37: Kante
- 38: Kante
- 39: Sicke
- 40: Sicke
- 41: Verbindungskante
- 42: Verbindungskante
- 43: Basisteil
- 44: Verbindungsteil
- 45: U-Profilabschnitt
- 46: Schenkel
- 47: Löcher
- 48: Befestigungsteil
- 49: U-Profilabschnitt
- 50: Löcher
- 51: Schenkel
- 52: Federclipse
- 53: Basisteil
- 54: Verbindungsteil
- 55: Löcher
- 56: Schlitze
- 57: Befestigungsteil
- 58: Löcher/Schlitze
- 59: Schrauben
- 60: Verbindungsteil
- 61: Verbindungsteil
- 62: Schlitz
- 63: Verstärkungssteg
- 64: Schlitz
- 65: Verstärkungssteg
- 66: C-Profil
- 67: C-Profil
- 68: Steg
- 69: Steg

## Patentansprüche

1. Abhängevorrichtung für Tragschienen (8), insbesondere für abgehängte Decken oder dergleichen, mit einem ersten Bauteil (12, 43, 53), welches ein Basisteil bildet, das zur Kopplung mit einer Tragschiene (8) ausgebildet ist, und mit einem zweiten Bauteil (12, 43, 53), welches ein Verbindungsteil bildet, das zum justierbaren Verbinden des Basisteils (12, 43, 53) mit einem Befestigungsteil (6, 48, 57) ausgebildet ist, wobei bei montierter Abhängevorrichtung das Basisteil (12, 43, 53) und das Verbindungsteil (13, 60, 61) durch eine mit dem Basisteil (12, 43, 53) gekoppelte Tragschiene (8) in einer vorgegebenen Belastungsrichtung (14) belastet werden,
**dadurch gekennzeichnet,**
**dass** sowohl in dem Basisteil (12, 43, 53) als auch in dem Verbindungsteil (13, 60, 61) zumindest zwei quer zur Belastungsrichtung (14) und im Wesentlichen parallel zueinander verlaufende Führungsschlitze (15, 23) ausgebildet sind,
**dass** die zwischen den Führungsschlitzen (15, 23) angeordneten Bereiche (17, 25) des Basisteils (12, 43, 53) sowie des Verbindungsteils (13, 60, 61) jeweils Halteabschnitte (18, 26) bilden und
**dass** das Basisteil (12, 43, 53) und das Verbindungsteil (13, 60, 61, 67) so in Längsrichtung der Führungsschlitze (15, 23) zusammengesteckt sind, dass der Halteabschnitt (18) des Basisteils (12, 43, 53) einen sich in Längsrichtung der Führungsschlitze (15, 23) an den Halteabschnitt (26) des Verbindungsteils (13, 60, 61) anschließenden Überlappungsbereich (33) des Verbindungsteils (13, 60, 61) überlappt und dass der Halteabschnitt (26) des Verbindungsteils (13, 60, 61) einen sich in Längsrichtung der Führungsschlitze (15, 23) an den Halteabschnitt (18) des Basisteils (12, 43, 53) anschlie-ßenden Überlappungsbereich (32) des Basisteils (12, 43, 53) überlappt.

2. Abhängevorrichtung nach Anspruch 1,
**dadurch gekennzeichnet,**
**dass** das Verbindungsteil (13, 60, 61) zumindest bereichsweise als Schlitz- oder Lochband, als Noniusprofil oder als Schnellspannfederprofil ausgebildet ist
und/oder
**dass** das Befestigungsteil (6, 48, 57) zumindest bereichsweise als Schlitz- oder Lochband, als Noniusprofil oder stangenförmig ausgebildet ist.

3. Abhängevorrichtung nach zumindest einem der Ansprüche 1 oder 2,
**dadurch gekennzeichnet,**
**dass** die in dem Basisteil (12, 43, 53) und/oder die in dem Verbindungsteil (13, 60, 61) ausgebildeten Führungsschlitze (15, 23) senkrecht zur Belastungsrichtung (14) verlaufen.

4. Abhängevorrichtung nach zumindest einem der vorhergehenden Ansprüche,
**dadurch gekennzeichnet,**
**dass** die in dem ersten Bauteil (12, 43, 53, 66) und/oder die in dem zweiten Bauteil (13, 60, 61, 67) ausgebildeten Führungsschlitze (15, 23) jeweils an einem Ende offen ausgebildet sind.

5. Zusammenbauteil mit einem zumindest bereichsweise flachförmigen ersten Bauteil (12, 43, 53, 66) und mit einem an dem ersten Bauteil (12, 43, 53, 66) befestigten zumindest bereichsweise flachförmigen zweiten Bauteil (13, 60, 61, 67),
wobei sowohl in dem ersten Bauteil (12, 43, 53, 66) als auch in dem zweiten Bauteil (13, 60, 61, 67) zumindest zwei im Wesentlichen parallel verlaufende Führungsschlitze (15, 23) ausgebildet sind,
wobei die zwischen den Führungsschlitzen (15, 23) angeordneten Bereiche (17, 25) des ersten Bauteils (12, 43, 53, 66) sowie des zweiten Bauteils (13, 60, 61, 67) jeweils Halteabschnitte (18, 26) bilden, wobei die in dem ersten Bauteil (12, 43, 53, 66) und die in dem zweiten Bauteil (13, 60, 61, 67) ausgebildeten Führungsschlitze (15, 23) an ihren jeweiligen beiden Enden geschlossen ausgebildet sind und sich nicht bis zum Rand des ersten und des zweiten Bauteils (12, 43, 53, 66; 13, 60, 61, 67) erstrecken und
wobei je ein Ende eines Führungsschlitzes (15, 23) über einen weiteren Schlitz (62, 64) mit je einem Ende des im Wesentlichen parallel dazu verlaufenden Führungsschlitzes (15, 23) verbunden ist, so dass die Halteabschnitte (18, 26) jeweils an drei Seiten durch die Führungsschlitze (15, 23) und den weiteren Schlitz (62, 64) begrenzt sind,
**dadurch gekennzeichnet,**
**dass** das erste Bauteil (12, 43, 53, 66) und das zweite Bauteil (13, 60, 61, 67) so in Längsrichtung der Führungsschlitze (15, 23) zusammengesteckt sind, dass der Halteabschnitt (18) des ersten Bauteils (12, 43, 53, 66) einen sich in Längsrichtung der Führungsschlitze (15, 23) an den Halteabschnitt (26) des zweiten Bauteils (13, 60, 61, 67) anschließenden Überlappungsbereich (33) des zweiten Bauteils (13, 60, 61, 67) überlappt und dass der Halteabschnitt (26) des zweiten Bauteils (13, 60, 61, 67) einen sich in Längsrichtung der Führungsschlitze (15, 23) an den Halteabschnitt (18) des ersten Bauteils (12, 43, 53, 66) anschließenden Überlappungsbereich (32) des ersten Bauteils (12, 43, 53, 66) überlappt.

6. Abhängevorrichtung/Zusammenbauteil nach zumindest einem der vorhergehenden Ansprüche,
**dadurch gekennzeichnet,**
**dass** die Führungsschlitze (15, 23) jeweils zumindest eine Führungskante (35, 36, 37, 38) umfassen
und/oder
**dass** das erste Bauteil (12, 43, 53, 66) und/oder das zweite Bauteil (13, 60, 61, 67) eine lang gestreckte, insbesondere sich quer zur Längsrichtung der Führungsschlitze (15, 23) erstreckende Form besitzt.

7. Abhängevorrichtung/Zusammenbauteil nach zumindest einem der vorhergehenden Ansprüche,
**dadurch gekennzeichnet,**
**dass** die sich überlappenden Halteabschnitte (18, 26) und Überlappungsbereiche (32, 33) des ersten Bauteils (12, 43, 53, 66) und/oder des zweiten Bauteils (13, 60, 61, 67) jeweils zumindest bereichsweise flächig, linienförmig oder punktförmig aneinander anliegen und einen doppellagigen Bereich des Zusammenbauteils bilden.

8. Abhängevorrichtung/Zusammenbauteil nach zumindest einem der vorhergehenden Ansprüche,
**dadurch gekennzeichnet,**
**dass** zumindest einer der Halteabschnitte (18, 26) an dem ihm zugeordneten Überlappungsbereich (32, 33) gegen ein Entkoppeln entgegen der Zusammensteckrichtung gesichert ist, insbesondere dass der Halteabschnitt (18, 26) mit dem Überlappungsbereich (32, 33) verrastet ist.

9. Abhängevorrichtung/Zusammenbauteil nach zumindest einem der vorhergehenden Ansprüche,
**dadurch gekennzeichnet,**
**dass** an dem Halteabschnitt (18, 26) des ersten Bauteils (12, 43, 53, 66) und/oder des zweiten Bauteils (13, 60, 61, 67) zumindest ein Rastelement (29, 30, 40) ausgebildet ist, das mit zumindest einem an dem Überlappungsbereich (32, 33) des ersten Bauteils (12, 43, 53, 66) und/oder des zweiten Bauteils (13, 60, 61, 67) ausgebildeten Gegenelement (28, 31, 39) zusammenwirkt.

10. Abhängevorrichtung/Zusammenbauteil nach Anspruch 9,
**dadurch gekennzeichnet,**
**dass** zumindest eines der Rastelemente (29, 30, 40) und/oder der Gegenelemente (28, 31, 39) als Vertiefung oder als Erhöhung ausgebildet ist, insbesondere dass das Rastelement (29, 30, 40) in die Vertiefung eingreift bzw. die Erhöhung übergreift.

11. Abhängevorrichtung/Zusammenbauteil nach zumindest einem der Ansprüche 9 oder 10,
**dadurch gekennzeichnet,**
**dass** das Rastelement und/oder das Gegenelement als sich insbesondere quer zur Längsrichtung der Führungsschlitze (15, 23) erstreckende Sicke (28, 29, 30, 31, 39, 40) ausgebildet ist.

12. Abhängevorrichtung/Zusammenbauteil nach zumindest einem der vorhergehenden Ansprüche,
**dadurch gekennzeichnet,**
**dass** das zweite Bauteil (13, 60, 61, 67) federelastisch und/oder U-förmig ausgebildet ist
und/oder
**dass** das zweite Bauteil (13, 60, 61, 67) aus federelastischem Metall, insbesondere aus Federstahl besteht.

13. Abhängevornchtung/Zusammenbauteil nach zumindest einem der vorhergehenden Ansprüche,
**dadurch gekennzeichnet,**
**dass** das erste Bauteil (12, 43, 53, 66) aus Metall besteht und/oder
**dass** das erste Bauteil (12, 43, 53, 66) und/oder das zweite Bauteil (13, 60, 61, 67) als Profilelement, insbesondere als C-, U-, H-, Z- oder Hut-Profil ausgebildet ist.

14. Verfahren zur Herstellung einer Abhängevorrichtung mit einem zumindest bereichsweise flachförmigen ersten Bauteil (12, 43, 53, 66) und mit einem an dem ersten Bauteil (12, 43, 53, 66) befestigten zumindest bereichsweise flachförmigen zweiten Bauteil (13, 60, 61, 67), wobei die Abhängevorrichtung insbesondere nach zumindest einem der Ansprüche 1 bis 4 oder 6 bis 13 ausgebildet ist,
**dadurch gekennzeichnet,**
**dass** sowohl in das erste Bauteil (12, 43, 53, 66) als auch in das zweite Bauteil (13, 60, 61, 67) zumindest zwei im Wesentlichen parallel verlaufende Führungsschlitze (15, 23) eingebracht werden, so dass die zwischen den Führungsschlitzen (15, 23) angeordneten Bereiche (17, 25) des ersten Bauteils (12, 43, 53, 66) sowie des zweiten Bauteils (13, 60, 61, 67) jeweils Halteabschnitte (18, 26) bilden und dass das erste Bauteil (12, 43, 53, 66) und das zweite Bauteil (13, 60, 61, 67) so in Längsrichtung der Führungsschlitze (15, 23) zusammengesteckt werden, dass der Halteabschnitt (18) des ersten Bauteils (12, 43, 53, 66) einen sich in Längsrichtung der Führungsschlitze (15, 23) an den Halteabschnitt (26) des zweiten Bauteils (13, 60, 61, 67) anschließenden Überlappungsbereich (33) des zweiten Bauteils (13, 60, 61, 67) überlappt und dass der Halteabschnitt (26) des zweiten Bauteils (13, 60, 61, 67) einen sich in Längsrichtung der Führungsschlitze (15, 23) an den Halteabschnitt (18, 60, 61, 67) des ersten Bauteils (12, 43, 53, 66) anschließenden Überlappungsbereich (32) des ersten Bauteils (12, 43, 53) überlappt.

15. Verfahren zur Herstellung eines Zusammenbauteils mit einem zumindest bereichsweise flachförmigen ersten Bauteil (12, 43, 53, 66) und mit einem an dem ersten Bauteil (12, 43, 53, 66) befestigten zumindest bereichsweise flachförmigen zweiten Bauteil (13, 60, 61, 67), wobei das Zusammenbauteil insbesondere nach zumindest einem der Ansprüche 5 bis 13 ausgebildet ist,
**dadurch gekennzeichnet,**
**dass** sowohl in das erste Bauteil (12, 43, 53, 66) als auch in das zweite Bauteil (13, 60, 61, 67) zumindest zwei im Wesentlichen parallel verlaufende, an ihren jeweiligen beiden Enden jeweils geschlossen ausgebildete Führungsschlitze (15, 23) sowie ein je ein Ende eines Führungsschlitzes (15, 23) mit je einem Ende des im Wesentlichen parallel dazu verlaufenden Führungsschlitzes (15, 23) verbindender weiterer Schlitz (62, 64) eingebracht werden, so dass die zwischen den Führungsschlitzen (15, 23) und dem weiteren Schlitz (62, 64) angeordneten Bereiche (17, 25) des ersten Bauteils (12, 43, 53, 66) sowie des zweiten Bauteils (13, 60, 61, 67) jeweils Halteabschnitte (18, 26) bilden und
**dass** das erste Bauteil (12, 43, 53, 66) und das zweite Bauteil (13, 60, 61, 67) so in Längsrichtung der Führungsschlitze (15, 23) zusammengesteckt werden, dass der Halteabschnitt (18) des ersten Bauteils (12, 43, 53, 66) einen sich in Längsrichtung der Führungsschlitze (15, 23) an den Halteabschnitt (26) des zweiten Bauteils (13, 60, 61, 67) anschließenden Überlappungsbereich (33) des zweiten Bauteils (13, 60, 61, 67) überlappt und dass der Halteabschnitt (26) des zweiten Bauteils (13, 60, 61, 67) einen sich in Längsrichtung der Führungsschlitze (15, 23) an den Halteabschnitt (18, 60, 61, 67) des ersten Bauteils (12, 43, 53, 66) anschließenden Überlappungsbereich (32) des ersten Bauteils (12, 43, 53) überlappt.

## Claims

1. A suspension apparatus for carrier rails (8), in particular for suspended ceilings or the like, having a first component (12, 43, 53) which forms a base part which is configured for coupling to a carrier rail (8) and having a second component (12, 43, 53) which forms a connection part which is configured for the adjustable connection of the base part (12, 43, 53) to a fastening part (6, 48, 57), wherein, with an assembled suspension apparatus, the base part (12, 43, 53) and the connection part (13, 60, 61) are loaded by a carrier rail (8) coupled to the base part (12, 43, 53) in a predefined load direction (14),
**characterized in that**
at least two guide slots (15, 23) extending transversely to the load direction (14) and substantially in parallel to one another are formed both in the base part (12, 43, 53) and in the connection part (13, 60, 61);
**in that** the regions (17, 25) of the base part (12, 43, 53) and of the connection part (13, 60, 61) arranged between the guide slots (15, 23) each form holding portions (18, 26); and
**in that** the base part (12, 43, 53) and the connection part (13, 60, 61, 67) are plugged together in the longitudinal direction of the guide slots (15, 23) such that the holding portion (18) of the base part (12, 43, 53) overlaps an overlap region (33) of the connection part (13, 60, 61) adjoining the holding portion (26) of the connection part (13, 60, 61) in the longitudinal direction of the guide slots (15, 23) and such that the holding portion (26) of the connection part (13, 60, 61) overlaps an overlap region (32) of the base part (12, 43, 53) adjoining the holding portion (18) of the base part (12, 43, 53) in the longitudinal direction of the guide slots (15, 23).

2. A suspension apparatus in accordance with claim 1,
**characterized in that**
the connection part (13, 60, 61) is formed at least regionally as a slotted band or as a perforated band, as a Nonius section or as a quick-clamping spring section:
and/or
**in that** the fastening part (6, 48, 57) is formed at least regionally as a slotted band or as a perforated band, as a Nonius section or in bar shape.

3. A suspension apparatus in accordance with at least one of the claims 1 or 2,
**characterized in that**
the guide slots (15, 23) formed in the base part (12, 43, 53) and/or the guide slots (15, 23) formed in the connection part (13, 60, 61) extend perpendicular to the load direction (14).

4. A suspension apparatus in accordance with at least one of the preceding claims,
**characterized in that**
the guide slots (15, 23) formed in the first component (12, 43, 53, 66) and/or the guide slots (15, 23) formed in the second component (13, 60, 61, 67) are each open at one end.

5. A component assembly having an at least regionally flat-shaped first component (12, 43, 53, 66) and having an at least regionally flat-shaped second component (13, 60, 61, 67) fastened to the first component (12, 43, 53, 66),
wherein at least two guide slots (15, 23) which extend substantially in parallel are formed both in the first component (12, 43, 53, 66) and in the second component (13, 60, 61, 67);
wherein the regions (17, 25) of the first component (12, 43, 53, 66) and of the second component (13, 60, 61, 67) arranged between the guide slots (15, 23) each form holding portions (18, 26);
wherein the guide slots (15, 23) formed in the first component (12, 43, 53, 66) and the guide slots (15, 23) formed in the second component (13, 60, 61, 67) are closed at their respective two ends and do not extend up to the margin of the first and second components (12, 43, 53, 66; 13, 60, 61, 67); and
wherein a respective end of a guide slot (15, 23) is connected via a further slot (62, 64) to a respective end of the guide slot (15, 23) which extends substantially in parallel thereto such that the holding portions (18, 26) are each bounded at three sides by the guide slots (15, 23) and the further slot (62, 64)
**characterized in that**
the first component (12, 43, 53, 66) and the second component (13, 60, 61, 67) are plugged together in the longitudinal direction of the guide slots (15, 23) such that the holding portion (18) of the first component (12, 43, 53, 66) overlaps an overlap region (33) of the second component (13, 60, 61, 67) adjoining the holding portion (26) of the second component (13, 60, 61, 67) in the longitudinal direction of the guide slots (15, 23) and such that the holding portion (26) of the second component (13, 60, 61, 67) overlaps an overlap region (32) of the first component (12, 43, 53, 66) adjoining the holding portion (18) of the first component (12, 43, 53, 66) in the longitudinal direction of the guide slots (15, 23).

6. A suspension apparatus/component assembly in accordance with at least one of the preceding claims,
**characterized in that**
the guide slots (15, 23) each comprise at least one guide edge (35, 36, 37, 38):
and/or
**in that** the first component (12, 43, 53, 66) and/or the second component (13, 60, 61, 67) has/have an elongated shape, in particular extending transversely to the longitudinal direction of the guide slots (15, 23).

7. A suspension apparatus/component assembly in accordance with at least one of the preceding claims,
**characterized in that**
the overlapping holding portions (18, 26) and overlap regions (32, 33) of the first component (12, 43, 53, 66) and/or of the second component (13, 60, 61, 67) each contact one another at least regionally areally, linearly or in point form and form a double-layer region of the component assembly.

8. A suspension apparatus/component assembly in accordance with at least one of the preceding claims,
**characterized in that**
at least one of the holding portions (18, 26) is secured against a decoupling against the plugging together direction at the overlap region (32, 33) associated with it; and in particular **in that** the holding portion (18, 26) is latched to the overlap region (32, 33).

9. A suspension apparatus/component assembly in accordance with at least one of the preceding claims,
**characterized in that**
at least one latch element (29, 30, 40) is formed at the holding portion (18, 26) of the first component (12, 43, 53, 66) and/or of the second component (13, 60, 61, 67) and cooperates with at least one counter-element (28, 31, 39) formed at the overlap region (32, 33) of the first component (12, 43, 53, 66) and/or of the second component (13, 60, 61, 67).

10. A suspension apparatus/component assembly in accordance with claim 9,
**characterized in that**
at least one of the latch elements (29, 30, 40) and/or of the counter-elements (28, 31, 39) is/are formed as a recess or as an elevated portion; and in particular **in that** the latch element (29, 30, 40) engages into the recess or engages over the elevated portion.

11. A suspension apparatus/ component assembly in accordance with at least one of the claims 9 or 10,
**characterized in that**
the latch element and/or the counter-element is/are formed as a bead (28, 29, 30, 31, 39, 40), in particular extending transversely to the longitudinal direction of the guide slots (15, 23).

12. A suspension apparatus/component assembly in accordance with at least one of the preceding claims,
**characterized in that**
the second component (13, 60, 61, 67) is formed as spring-elastic and/or in U shape;
and/or
**in that** the second component (13, 60, 61, 67) is composed of spring-elastic metal, in particular spring steel.

13. A suspension apparatus/component assembly in accordance with at least one of the preceding claims,
**characterized in that**
the first component (12, 43, 53, 56) is composed of metal:
and/or
**in that** the first component (12, 43, 53, 66) and/or the second component (13, 60, 61, 67) is/are formed as a section element, in particular as a C section, U section, H section, Z section or hat section.

14. A method of manufacturing a suspension apparatus having an at least regionally flat-shaped first component (12, 43, 53, 66) and having an at least regionally flat-shaped second component (13, 60, 61, 67) fastened to the first component (12, 43, 53, 66), wherein the suspension apparatus is in particular configured in accordance with at least one of the claims 1 to 4, or 6 to 13,
**characterized in that**
at least two guide slots (15, 23) which extend substantially in parallel to one another are introduced both into the first component (12, 43, 53, 66) and into the second component (13, 60, 61, 67) such that the regions (17, 25) of the first component (12, 43, 53, 66) and of the second component (13, 60, 61, 67) arranged between the guide slots (15, 23) each form holding portions (18, 26); and
**in that** the first component (12, 43, 53, 66) and the second component (13, 60, 61, 67) are plugged together in the longitudinal direction of the guide slots (15, 23) such that the holding portion (18) of the first component (12, 43, 53, 66) overlaps an overlap region (33) of the second component (13, 60, 61, 67) adjoining the holding portion (26) of the second component (13, 60, 61, 67) in the longitudinal direction of the guide slots (15, 23) and such that the holding portion (26) of the second component (13, 60, 61, 67) overlaps an overlap region (32) of the first component (12, 43, 53) adjoining the holding portion (18, 60, 61, 67) of the first component (12, 43, 53, 66) in the longitudinal direction of the guide slots (15, 23).

15. A method of manufacturing a component assembly having an at least regionally flat-shaped first component (12, 43, 53, 66) and having an at least regionally flat-shaped second component (13, 60, 61, 67) fastened to the first component (12, 43, 53, 66), wherein the component assembly is in particular configured in accordance with at least one of the claims 5 to 13.
**characterized in that**
at least two guide slots (15, 23) which extend substantially in parallel to one another and are each closed at their respective two ends as well as a further slot (62, 64) which connects a respective one end of a guide slot (15, 23) to a respective one end of the guide slot (15, 23) extending substantially in parallel thereto are introduced both into the first component (12, 43, 53, 66) and into the second component (13, 60, 61, 67) such that the regions (17, 25) of the first component (12, 43, 53, 66) and of the second component (13, 60, 61, 67) arranged between the guide slots (15, 23) and the further guide slot (62, 64) each form holding portions (18, 26); and **in that** the first component (12, 43, 53, 66) and the second component (13, 60, 61, 67) are plugged together in the longitudinal direction of the guide slots (15, 23) such that the holding portion (18) of the first component (12, 43, 53, 66) overlaps an overlap region (33) of the second component (13, 60, 61, 67) adjoining the holding portion (26) of the second component (13, 60, 61, 67) in the longitudinal direction of the guide slots (15, 23) and such that the holding portion (26) of the second component (13, 60, 61, 67) overlaps an overlap region (32) of the first component (12, 43, 53) adjoining the holding portion (18, 60, 61, 67) of the first component (12, 43, 53, 66) in the longitudinal direction of the guide slots (15, 23).

## Revendications

1. Dispositif de suspension pour des rails porteurs (8), en particulier pour des plafonds suspendus ou similaires, comprenant un premier composant (12, 43, 53) qui forme une partie de base et qui est réalisé pour être accouplé à un rail porteur (8), et comprenant un second composant (12, 43, 53) qui forme une partie de liaison et qui est réalisé pour relier de manière ajustable la partie de base (12, 43, 53) à une partie de fixation (6, 48, 57), dans lequel, lorsque le dispositif de suspension est monté, la partie de base (12, 43, 53) et la partie de liaison (13, 60, 61) sont sollicitées, par un rail porteur (8) accouplé avec la partie de base (12, 43, 53), dans une direction de sollicitation (14) prédéterminée,
**caractérisé en ce que**
au moins deux fentes de guidage (15, 23) s'étendant transversalement à la direction de sollicitation (14) et sensiblement parallèlement l'une à l'autre sont ménagées aussi bien dans la partie de base (12, 43, 53) que dans la partie de liaison (13, 60, 61),
**en ce que** les zones (17, 25), agencées entre les fentes de guidage (15, 23) de la partie de base (12, 43, 53) ainsi que de la partie de liaison (13, 60, 61) forment respectivement des tronçons de maintien (18, 26),
et
**en ce que** la partie de base (12, 43, 53) et la partie de liaison (13, 60, 61, 67) sont emboîtées en direction longitudinale des fentes de guidage (15, 23) de telle façon que le tronçon de maintien (18) de la partie de base (12, 43, 53) recouvre une zone de recouvrement (33), qui fait suite au tronçon de maintien (26) de la partie de liaison (13, 60, 61) en direction longitudinale des fentes de guidage (15, 23), de la partie de liaison (13, 60, 61), et **en ce que** le tronçon de maintien (26) de la partie de liaison (13, 60, 61) recouvre une zone de recouvrement (32), qui fait suite au tronçon de maintien (18) de la partie de base (12, 43, 53) en direction longitudinale des fentes de guidage (15, 23), de la partie de base (12, 43, 53).

2. Dispositif de suspension selon la revendication 1,
**caractérisé en ce que** la partie de liaison (13, 60, 61) est réalisée au moins localement sous forme d'un ruban à fentes ou à trous, d'un profilé dit de "Nonius" ou d'un profilé ressort à action rapide,
et/ou
**en ce que** la partie de fixation (6, 48, 57) est réalisée au moins localement sous forme d'un ruban à fentes ou à trous, d'un profilé de Nonius, ou en forme de barreau.

3. Dispositif de suspension selon l'une au moins des revendications 1 ou 2,
**caractérisé en ce que** les fentes de guidage (15, 23) réalisées dans la partie de base (12, 43, 53) et/ou les fentes de guidage (15, 23) réalisées dans la partie de liaison (13, 60, 61) s'étendent perpendiculairement à la direction de sollicitation (14).

4. Dispositif de suspension selon l'une au moins des revendications précédentes,
**caractérisé en ce que** les fentes de guidage (15, 23) réalisées dans le premier composant (12, 43, 53, 66) et/ou les fentes de guidage (15, 23) réalisées dans le second composant (13, 60, 61, 67) sont réalisées ouvertes respectivement à une extrémité.

5. Assemblage de composants comprenant un premier composant (12, 43, 53, 66) au moins localement sous forme aplatie, et comprenant un second composant (13, 60, 61, 67) au moins localement sous forme aplatie, fixé sur le premier composant (12, 43, 53, 66),
dans lequel au moins deux fentes de guidage (15, 23) s'étendant sensiblement parallèlement sont réalisées aussi bien dans le premier composant (12, 43, 53, 66) que dans le second composant (13, 60, 61,67),
dans lequel les zones (17, 25) du premier composant (12, 43, 53, 66) ainsi que du second composant (13, 60, 61, 67) agencées entre les fentes de guidage (15, 23) forment respectivement des tronçons de maintien (18, 26), dans lequel les fentes de guidage (15, 23) réalisées dans le premier composant (12, 43, 53, 66) et les fentes de guidage (15,23) réalisées dans le second composant (13, 60, 61, 67) sont réalisées fermées à leurs deux extrémités respectives, et ne s'étendent pas jusqu'au bord du premier et du second composant (12, 43, 53, 66 ; 13, 60, 61, 67), et
dans lequel une extrémité respective d'une fente de guidage (15, 23) est reliée, via une autre fente (62, 64), avec une extrémité respective de la fente de guidage (15, 23) s'étendant sensiblement parallèlement à celle-ci, de sorte que les tronçons de maintien (18, 26) sont respectivement limités sur trois côtés par les fentes de guidage (15, 23) et par l'autre fente (62, 64),
**caractérisé en ce que**
le premier composant (12, 43, 53, 66) et le second composant (13, 61, 61, 67) sont emboîtés en direction longitudinale des fentes de guidage (15, 23) de telle façon que le tronçon de maintien (18) du premier composant (12, 43, 53, 66) recouvre une zone de recouvrement (33), qui fait suite au tronçon de maintien (26) du second composant (13, 60, 61, 67) en direction longitudinale des fentes de guidage (15, 23), du second composant (13, 60, 61, 67), et **en ce que** le tronçon de maintien (26) du second composant (13, 60, 61, 67) recouvre une zone de recouvrement (32), qui fait suite au tronçon de maintien (18) du premier composant (12, 43, 53, 66) en direction longitudinale des fentes de guidage (15, 23), du premier composant (12, 43, 53, 66).

6. Dispositif de suspension/Assemblage de composants selon l'une au moins des revendications précédentes,
**caractérisé en ce que**
les fentes de guidage (15, 23) comportent respectivement au moins une arête de guidage (35, 36, 37, 38),
et/ou
**en ce que** le premier composant (12, 43, 53, 66) et/ou le second composant (13, 60, 61, 67) possède une forme étirée en longueur, en particulier une forme qui s'étire transversalement à la direction longitudinale des fentes de guidage (15, 23).

7. Dispositif de suspension/Assemblage de composants selon l'une au moins des revendications précédentes,
**caractérisé en ce que** les tronçons de maintien (18, 26) en recouvrement et les zones de recouvrement (32, 33) du premier composant (12, 43, 53, 66) et/ou du second composant (13, 60, 61, 67) s'appliquent les uns contre les autres respectivement au moins localement à plat, le long d'une ligne ou de manière ponctuelle, et forment une zone à deux couches de l'assemblage de composants.

8. Dispositif de suspension/Assemblage de composants selon l'une au moins des revendications précédentes,
**caractérisé en ce que** l'un au moins des tronçons de maintien (18, 26) est bloqué, au niveau de la zone de recouvrement (32, 33) qui lui est associée, à l'encontre d'un découplage en sens contraire à la direction d'emboîtement, en particulier **en ce que** le tronçon de maintien (18, 26) est enclenché avec la zone de recouvrement (32, 33).

9. Dispositif de suspension/Assemblage de composants selon l'une au moins des revendications précédentes,
**caractérisé en ce que**
sur le tronçon de maintien (18, 26) du premier composant (12, 43, 53, 66) et/ou du second composant (13, 60, 61, 67) est réalisé au moins un élément d'enclenchement (29, 30, 40), qui coopère avec au moins un élément antagoniste (28, 31, 39) réalisé sur la zone de recouvrement (32, 33) du premier composant (12, 43, 53, 66) et/ou du second composant (13, 60, 61, 67).

10. Dispositif de suspension/Assemblage de composants selon la revendication 9,
**caractérisé en ce que** l'un au moins des éléments d'enclenchement (29, 30, 40) et/ou des éléments antagonistes (28, 31, 39) est réalisé sous forme de renfoncement ou de saillie, en particulier **en ce que** l'élément d'enclenchement (29, 30, 40) s'engage dans le renfoncement ou coiffe la saillie.

11. Dispositif de suspension/Assemblage de composants selon l'une des revendications 9 ou 10,
**caractérisé en ce que** l'élément d'enclenchement et/ou l'élément antagoniste est réalisé sous la forme d'une moulure (28, 29, 30, 31, 39, 40) qui s'étend en particulier perpendiculairement à la direction longitudinale des fentes de guidage (15, 23).

12. Dispositif de suspension/Assemblage de composants selon l'une au moins des revendications précédentes,
**caractérisé en ce que** le second composant (13, 60, 61, 67) est réalisé de manière à présenter l'élasticité d'un ressort et/ou en forme de U,
et/ou **en ce que** le second composant (13, 60, 61, 67) est réalisé en un métal présentant l'élasticité d'un ressort, en particulier en acier-ressort.

13. Dispositif de suspension/Assemblage de composants selon l'une au moins des revendications précédentes,
**caractérisé en ce que** le premier composant (12, 43, 53, 66) est en métal,
et/ou **en ce que** le premier composant (12, 43, 53, 66) et/ou le second composant (13, 60, 61, 67) est réalisé comme un élément profilé, en particulier un profilé en C, en U, en H, en Z ou en forme de chapeau.

14. Procédé pour la fabrication d'un dispositif de suspension avec un premier composant au moins localement en forme aplatie (12, 43, 53, 66) et avec un second composant (13, 60, 61, 67) au moins localement en forme aplatie, fixé sur le premier composant (12, 43, 53, 66), dans lequel le dispositif de suspension est réalisé en particulier selon l'une au moins des revendications 1 à 4 ou 6 à 13,
**caractérisé en ce que**
au moins deux fentes de guidage (15, 23) s'étendant sensiblement parallèlement sont ménagées aussi bien dans le premier composant (12, 43, 53, 66) que dans le second composant (13, 60, 61, 67), de sorte que les zones (17, 25) du premier composant (12, 43, 53, 66) et du second composant (13, 60, 61, 67) agencées entre les fentes de guidage (15, 23) forment respectivement des tronçons de maintien (18, 26), et **en ce que** le premier composant (12, 43, 53, 66) et le second composant (13, 60, 61, 67) sont emboîtés en direction longitudinale des fentes de guidage (15, 23) de telle manière que le tronçon de maintien (18) du premier composant (12, 43, 53, 66) recouvre une zone de recouvrement (33), qui fait suite au tronçon de maintien (26) du second composant (13, 60, 61, 67) en direction longitudinale des fentes de guidage (15, 23), du second composant (13, 60, 61, 67) et **en ce que** le tronçon de maintien (26) du second composant (13, 60, 61, 67) recouvre une zone de recouvrement (32), qui fait suite au tronçon de maintien (18, 60, 61, 67) en direction longitudinale des fentes de guidage (15, 23), du premier composant (12, 43, 53).

15. Procédé pour la fabrication d'un assemblage de composants comprenant un premier composant (12, 43, 53, 66) au moins localement sous forme aplatie, et comprenant un second composant (13, 60, 61, 67) au moins localement sous forme aplatie et fixé sur le premier composant (12, 43, 53, 66), dans lequel l'assemblage de composants est réalisé en particulier selon l'une au moins des revendications 5 à 13,
**caractérisé en ce que**
au moins deux fentes de guidage (15, 23) s'étendant sensiblement parallèlement et réalisées respectivement fermées à leurs deux extrémités respectives, ainsi qu'une autre fente (62, 64) qui relie respectivement une extrémité d'une fente de guidage (15, 23) à une extrémité respective de la fente de guidage (15, 23) s'étendant sensiblement parallèlement à celle-ci, sont ménagées aussi bien dans le premier composant (12, 43, 53, 66) que dans le second composant (13,60, 61, 67), de sorte que les zones (17, 25), agencées entre les fentes de guidage (15, 23) et l'autre fente (62, 64), du premier composant (12, 43, 53, 66) ainsi que du second composant (13, 60, 61, 67) forment respectivement des tronçons de maintien (18, 26), et **en ce que** le premier composant (12, 43, 53, 66) et le second composant (13, 60, 61, 67) sont emboîtés ensemble en direction longitudinale des fentes de guidage (15, 23) de telle manière que le tronçon de maintien (18) du premier composant (12, 43, 53, 66) recouvre une zone de recouvrement (33), qui fait suite au tronçon de maintien (26) du second composant (13, 60, 61, 67) en direction longitudinale des fentes de guidage (15, 23), du second composant (13, 60, 61, 67) et **en ce que** le tronçon de maintien (26) du second composant (13, 60, 61, 67) recouvre une zone de recouvrement (32), qui fait suite au tronçon de maintien (18, 60, 61, 67) en direction longitudinale des fentes de guidage (15, 23), du premier composant (12, 43, 53, 66), du premier composant (12, 43, 53).
